# FASCICULE DE BREVET EUROPEEN

(11) **EP 1 616 109 B1**
(45) Date de publication et mention de la délivrance du brevet: **02.05.2012**
(21) Numéro de dépôt: 04742852.9
(22) Date de dépôt: 21.04.2004
(51) Int. Cl.: F16D 48/00

(54) **DISPOSITIF DE DIAGNOSTIC DE L'USURE DES GARNITURES DE FRICTION D'UN EMBRAYAGE**
VORRICHTUNG ZUR DIAGNOSE DER REIBBELAGSABNUTZUNG EINER KUPPLUNG
DEVICE FOR IDENTIFYING CLUTCH FRICTION LINING WEAR

(30) Priorité: 22.04.2003 FR 0304941
(43) Date de publication de la demande: 18.01.2006
(73) Titulaire: Valeo Embrayages, 80009 Amiens Cedex 1 (FR)
(72) Inventeur: LOPEZ, Carlos, E-5 Madrid (ES)
(74) Mandataire: Jeuland, Mickaël
(86) Numéro de dépôt international: PCT/FR2004/050166
(87) Numéro de publication internationale: WO 2004/094855

(56) Documents cités:
- DE-A- 10 220 869
- FR-A- 2 593 287
- GB-A- 2 376 997
- US-A- 6 040 768

## Description

L'invention concerne un dispositif de diagnostic de l'usure des garnitures de friction d'un embrayage de véhicule automobile, en particulier d'un véhicule de tourisme.

Un tel embrayage comprend un diaphragme annulaire sollicitant un plateau de pression vers un plateau de réaction pour le serrage des garnitures de friction portées par un disque solidaire en rotation d'un arbre d'entrée d'une boîte de vitesses.

Le diaphragme annulaire comprend une rondelle Belleville en appui sur le plateau de pression et pivotant sur un couvercle d'embrayage, et des doigts radiaux s'étendant vers l'axe de rotation et venant en appui sur une butée de débrayage déplaçable parallèlement à l'axe de rotation par une tringlerie actionnée par une pédale d'embrayage.

Le couple moteur est transmis du plateau de réaction au disque de friction quand l'embrayage est serré et le déplacement de la pédale d'embrayage à partir de sa position de repos permet d'ouvrir progressivement l'embrayage puis de le fermer progressivement quand la pédale est ramenée en position de repos. Le glissement qui se produit entre les garnitures de friction et les plateaux de réaction et de pression à l'ouverture et au serrage de l'embrayage se traduit par une usure progressive de ces garnitures et par un déplacement du point de serrage du côté d'une augmentation de la force appliquée au plateau de pression par le diaphragme annulaire, de sorte que la force qu'il faut appliquer à la pédale pour l'ouverture de l'embrayage augmente au fur et à mesure de l'usure des garnitures de friction.

L'invention se propose de détecter cette augmentation de force pour en déduire une information sur l'usure des garnitures de friction, sans qu'il soit nécessaire pour cela de démonter l'embrayage et d'examiner les garnitures ou de mesurer le déplacement d'un organe situé dans le compartiment moteur du véhicule.

Elle a pour objet un dispositif de diagnostic de l'usure des garnitures de friction d'un embrayage d'un véhicule automobile comme celui décrit dans US 6040768 (Drexl). l'objet de l'invention est*,* caractérisé en ce qu'il comprend des moyens de mesure de l'effort exercé sur la pédale d'embrayage du véhicule pour le débrayage, et des moyens de fixation des moyens de mesure sur la pédale d'embrayage. EP 1394007 décrit des moyens de mesure de l'effort fixés sur la pédale, mais sans relation avec le diagnostic de l'usure des garnitures.

Grâce au dispositif selon l'invention, on obtient une information sur le degré d'usure des garnitures, qui est en général suffisante pour décider s'il faut changer ces garnitures ou s'il est possible d'attendre un prochain contrôle.

Les moyens de mesure sont équipés d'un capteur de force ou de pression et d'un capteur de position ou de déplacement pour la mesure de la variation de la force de débrayage en fonction de la position de la pédale et/ou d'une horloge pour la mesure de la variation de la force de débrayage en fonction du temps.

Le capteur de position ou de déplacement peut comprendre des moyens de liaison à un point fixe, tel par exemple que le volant du véhicule automobile. En variante, les moyens de mesure comprennent un télémètre, par exemple du type laser ou à ultrasons, installé sur la pédale pour viser un point fixe, ou installé en un point fixe pour viser la pédale ou les moyens de mesure.

Selon une autre caractéristique de l'invention, les moyens de mesure comprennent des moyens d'enregistrement de la force exercée sur eux pour le débrayage et des moyens de connexion à un système de traitement de l'information.

Ce système peut être distant et les moyens de mesure y sont alors connectés après démontage de sur la pédale d'embrayage.

En variante, le système de traitement de l'information est du type portable pour être relié en permanence aux moyens de mesure et comprend des moyens d'affichage des mesures. Ce système peut en variante être intégré dans les moyens de mesure.

Dans un mode de réalisation préféré, les moyens de mesure forment un ensemble monobloc.

Lorsque l'embrayage du véhicule automobile ne comprend pas de moyens de rattrapage automatique de l'usure des garnitures de friction, le dispositif selon l'invention permet de suivre l'évolution de l'usure de ces garnitures.

Lorsque l'embrayage du véhicule est équipé de moyens automatiques de rattrapage d'usure des garnitures de friction, ces moyens sont en général conçus pour attirer l'attention sur le degré d'usure des garnitures de friction lorsque celui-ci atteint une valeur relativement élevée, par exemple de l'ordre de 70 ou 80%.

Par exemple, certains moyens connus cessent de rattraper l'usure des garnitures lorsque le degré d'usure est voisin de 80%. D'autres moyens d'usure sont conçus pour produire un saut de rattrapage d'usure lorsque le degré d'usure des garnitures atteint 80% environ. Dans les deux cas, l'usure des garnitures est alors détectable par le dispositif selon l'invention.

L'invention sera mieux comprise et d'autres caractéristiques, détails et avantages et celle-ci apparaîtront plus clairement à la lecture de la description qui suit, faite à titre d'exemple en référence aux dessins annexés dans lesquels :
- la figure 1 représente schématiquement la courbe de l'effort à la pédale d'embrayage en fonction de la course de la pédale, et ses variations en fonction de l'usure des garnitures de friction ;
- la figure 2 représente schématiquement la courbe de l'effort à la butée d'embrayage en fonction du déplacement de la butée ;
- la figure 3 représente schématiquement une pédale d'embrayage équipée du dispositif selon l'invention ;
- la figure 4 représente schématiquement les composants essentiels du dispositif selon l'invention.

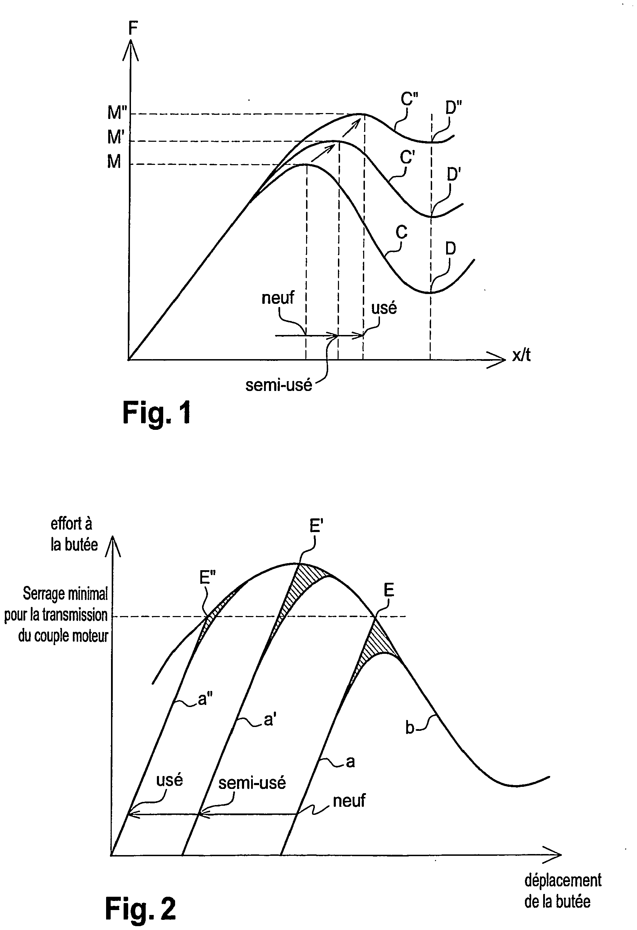

On se réfère d'abord à la figure 1 qui représente une courbe typique C de variation de l'effort F exercé sur une pédale d'embrayage d'un véhicule automobile par le conducteur du véhicule pour le débrayage en fonction de la course x de la pédale depuis sa position de repos, l'effort F croissant à partir d'une valeur nulle pour atteindre un maximum M, puis décroissant jusqu'au débrayage complet indiqué en D.

Au fur et à mesure de l'usure des garnitures de friction, la courbe C se déplace vers la courbe C', puis vers la course C" et la valeur maximum M de la force, qui est typiquement de 90 N environ pour des garnitures de friction neuves, augmente progressivement vers les valeurs M' et M" quand les garnitures de friction s'usent.

Le dispositif de diagnostic selon l'invention permet de détecter l'augmentation de la valeur maximale de l'effort de débrayage à la pédale ou le déplacement du point d'effort maximal pour en déduire une information sur le degré d'usure des garnitures de friction.

La figure 2 représente les variations de l'effort à la butée de débrayage en fonction du déplacement de cette butée (la butée agissant, de façon bien connue de l'homme du métier, sur les doigts radiaux d'un diaphragme annulaire qui pousse un plateau de pression vers un plateau de réaction pour le serrage des garnitures de friction entre les deux plateaux et la transmission d'un couple de rotation par l'embrayage).

La courbe de débrayage de la figure 2 comprend une première partie a qui correspond à la flexion des doigts du diaphragme et une deuxième partie b au cours de laquelle la charge appliquée par le diaphragme sur le plateau de pression pour le serrage des garnitures diminue progressivement.

Au fur et à mesure de l'usure des garnitures, la première partie de courbe se déplace en a' puis en a".

Les zones hachurées des courbes illustrent l'assistance donnée par la progressivité due à la déformation élastique des garnitures. Les points E, E' et E" désignent les états "embrayés" à neuf, à mi-usure et à usure presque complète des garnitures.

On voit sur les courbes des figures 1 et 2 que l'effort maximum à exercer sur la pédale pour le débrayage augmente avec l'usure des garnitures et que le point de la courbe de déplacement de la pédale pour lequel l'effort est maximal se déplace également avec l'usure des garnitures.

On peut donc constater l'usure des garnitures et leur évolution par mesure de paramètres différents :
- mesure des efforts maximaux M à la pédale,
- mesure des positions correspondant à ces efforts maximaux,
- mesure des pentes des courbes C (par dérivation) après les points d'effort maximal M, M' et M",
- mesure des efforts aux points D, D' et D".

On peut également utiliser une équation combinant plusieurs des paramètres ci-dessus, chacun de ces paramètres ayant une valeur pondérée.

De préférence, on fera plusieurs mesures successives, pour moyenner la valeur du paramètre et améliorer la précision de la mesure.

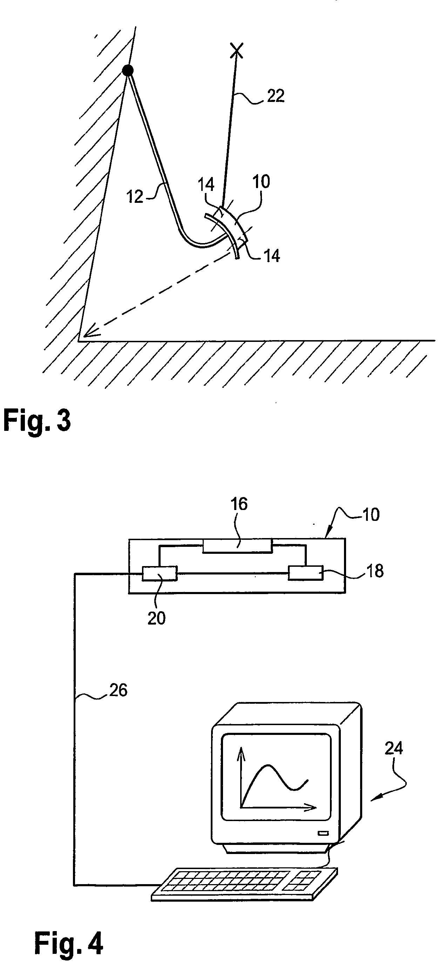

Comme représenté schématiquement aux figures 3 et 4, le dispositif selon l'invention comprend un ensemble monobloc de mesure 10 qui est destiné à être fixé sur une pédale d'embrayage 12 par tous moyens appropriés, tels par exemple que des liens élastiques ou des crochets 14, de façon à recouvrir la partie de la pédale 12 sur laquelle le conducteur appuie avec le pied pour le débrayage. Lorsque le bloc de mesure 10 est en place comme représenté schématiquement en figure 3, c'est sur ce bloc que l'on va appuyer pour déplacer la pédale et effectuer le débrayage.

Le bloc 10 est équipé d'au moins un capteur de force ou de pression 16, qui peut être intégré dans le bloc 10 au voisinage de sa face supérieure comme représenté, ce capteur étant par exemple du type de ceux équipant les pèse-personnes ou les balances de ménage.

Le bloc de mesure 10 comprend encore des moyens 18 d'alimentation électrique, tels par exemple qu'une pile d'un type courant, une mémoire 20 d'enregistrement des mesures, et au moins un capteur de déplacement ou de position, un télémètre et/ou une horloge pour la mesure des variations de l'effort appliqué à la pédale en fonction de la course de la pédale, de sa position et / ou du temps.

On peut, par exemple comme représenté schématiquement en figure 3, équiper le bloc de mesure 10 d'un capteur de déplacement 22 qui est du type à tige télescopique ou à enroulement, dont une extrémité est solidaire du bloc de mesure 10 et dont l'autre extrémité peut être accrochée ou fixée en un point fixe, par exemple au volant du véhicule ou à la colonne de direction.

En variante, le bloc de mesure 10 peut être équipé d'un télémètre laser ou à ultrasons permettant de mesurer le distance séparant le bloc de mesure 10 du fond du logement de la pédale dans l'habitacle comme indiqué en traits pointillés en figure 3.

En variante, le télémètre peut être installé en un point fixe à proximité de la pédale et viser une partie de la pédale ou du bloc de mesure. On peut aussi simplement équiper le bloc de mesure 10 d'une horloge pour déterminer la variation de l'effort à la pédale en fonction du temps lors d'un débrayage, cette variation étant semblable à celle représentée en figure 1 et ayant approximativement les mêmes propriétés.

Le dispositif selon l'invention comprend encore un système 24 de traitement de l'information, tel qu'un micro-ordinateur du type PC ou portable par exemple, qui peut être connecté comme représenté en 26 en figure 4 à la mémoire 20 du bloc 10 dans laquelle sont enregistrés les signaux de sortie du capteur 16 de force ou de pression, du capteur de déplacement ou de position 22, du télémètre et/ou de l'horloge.

Lorsque le système 24 de traitement de l'information est du type portable, la connexion 26 à la mémoire 20 du bloc de mesure 10 peut être établie quand le bloc 10 est monté sur la pédale 12. En variante, le système 24 peut être intégré dans le bloc de mesure.

Dans ce cas, on peut examiner sur place la courbe C, C', ou C" que l'on obtient en appuyant plusieurs fois sur le bloc 10 jusqu'au débrayage complet ou examiner les valeurs maximales M, M' ou M" de l'effort au débrayage et/ou les déplacements du point d'effort maximal.

Lorsque le système 24 de traitement de l'information est un ordinateur de bureau, on peut monter le bloc de mesure 10 sur la pédale d'embrayage 12, appuyer à plusieurs reprises sur cette pédale jusqu'au débrayage complet, puis retirer le bloc 10 de sur la pédale d'embrayage 12, le porter jusqu'au voisinage immédiat du système 24 de traitement de l'information et le connecter à ce système pour examiner les mesures. Plusieurs actionnements de la pédale jusqu'au débrayage complet permettent de moyenner les mesures et d'augmenter la précision.

Avantageusement, on a préalablement enregistré dans le système 24 de traitement de l'information des données relatives au modèle de véhicule sur lequel ces mesures ont été effectuées.

En variante, on peut aussi rentrer préalablement dans le système 24 de traitement de l'information certaines données relatives au modèle du véhicule, telles que le type de moteur (essence, diesel, injection), sa cylindrée, sa puissance, la présence de moyens de suralimentation en air, etc. pour en déduire à partir de valeurs moyennes de réalisation d'un embrayage adapté à ces caractéristiques un effort de débrayage que l'on va comparer aux mesures réalisées.

Le dispositif selon l'invention permet ainsi, de façon simple, rapide et peu coûteuse d'obtenir une information sur le degré d'usure des garnitures de friction de l'embrayage sans qu'il soit nécessaire d'y avoir accès.

L'invention s'applique à tous les types d'embrayage (poussé ou tiré, à commande par câble, à commande hydraulique, à commande par vérin concentrique à l'arbre, etc.)

On prévoit avantageusement d'enregistrer en mémoire les valeurs mesurées, la référence du véhicule et son kilométrage, pour un suivi de l'évolution de l'usure à chaque vérification.

Le système informatique 24 peut servir à communiquer, par exemple par Internet, avec le fabricant de l'équipement de mesure pour des échanges de données :
- par exemple pour la transmission de mesures d'usure réelle après démontage et échange de l'embrayage pour comparaison avec les valeurs estimées d'usure,
- pour mise à jour de données de référence par type de véhicule et enregistrement de données relatives à de nouveaux véhicules.

Il peut être conçu, de plus, pour effectuer des moyennes de mesures successives, afficher des courbes complètes ou seulement certains points de mesure, calculer des dérivées, etc., et plus généralement pour faire tout ce qui est nécessaire à la mise en oeuvre de l'invention décrite ci-dessus.

Ce système 24 peut également afficher les résultats de mesure en pourcentage d'usure, par exemple pour prévenir le conducteur ou le propriétaire du véhicule que l'usure des garnitures de l'embrayage est dans une fourchette de valeurs 25-30 % ou 50-75 %, ou afficher ces résultats sous forme graphique par échelons ou pavés dont la hauteur varie avec le pourcentage d'usure.

Dans certains cas, le système 24 peut détecter une anomalie dans les mesures, par comparaison avec des valeurs théoriques, et afficher cette anomalie ainsi qu'un diagnostic de panne ou de défaillance correspondant à l'anomalie détectée.

## Revendications

1. Dispositif de diagnostic de l'usure des garnitures de friction d'un embrayage de véhicule automobile, comprenant des moyens (10) de mesure de l'effort exercé sur la pédale d'embrayage du véhicule pour le débrayage et **caractérisé en ce qu'**il comprend des moyens (14) de fixation des moyens de mesure (10) sur la pédale d'embrayage (12).

2. Dispositif selon la revendication 1, **caractérisé en ce que** les moyens de mesure (10) forment un ensemble monobloc.

3. Dispositif selon la revendication 1 ou 2, **caractérisé en ce que** les moyens de mesure (10) comprennent un capteur (16) de force ou de pression.

4. Dispositif selon l'une des revendications précédentes, **caractérisé en ce que** les moyens de mesure (10) comprennent un capteur de déplacement ou de position (22) pour la mesure de la variation de la force de débrayage en fonction de la position de la pédale (12).

5. Dispositif selon la revendication 4, **caractérisé en ce que** le capteur de déplacement ou de position (22) comprend des moyens de liaison à un point fixe, tel par exemple que le volant du véhicule.

6. Dispositif selon l'une des revendications précédentes, **caractérisé en ce que** les moyens de mesure (10) comprennent un télémètre, par exemple du type laser ou à ultrasons.

7. Dispositif selon l'une des revendications précédentes, caractérisé en ce les moyens de mesure (10) comprennent une horloge pour la mesure de la variation de la force de débrayage en fonction du temps.

8. Dispositif selon l'une des revendications précédentes, **caractérisé en ce que** les moyens de mesure (10) comprennent des moyens (16) d'enregistrement des variations de la force exercée sur eux.

9. Dispositif selon l'une des revendications précédentes, **caractérisé en ce que** les moyens de mesure (10) comprennent des moyens de connexion (26) à un système (24) de traitement de l'information.

10. Dispositif selon la revendication 9, **caractérisé en ce que** le système de traitement de l'information (24) est distant et les moyens de mesure y sont connectés après démontage de sur la pédale (12).

11. Dispositif selon la revendication 9 ou 10, **caractérisé en ce que** le système de traitement de l'information (24) comporte des moyens d'affichage des mesures et des courbes de variation des mesures en fonction des déplacements ou du temps.

12. Dispositif selon l'une des revendications 9 à 11, **caractérisé en ce que** le système de traitement de l'information comprend des moyens d'affichage d'un nombre déterminé de points de mesure.

13. Dispositif selon l'une des revendications 9 à 12, **caractérisé en ce que** le système de traitement de l'information (24) est conçu pour effectuer des moyennes de mesures relevées au cours de plusieurs actionnements de la pédale et pour estimer l'usure des garnitures à partir des mesures de l'effort maximum à la pédale, du déplacement du point d'effort maximum avec l'usure, de l'effort à la pédale au point de débrayage complet et/ou de la pente de la courbe de l'effort à la pédale après le point d'effort maximum.

14. Dispositif selon l'une des revendications 9 à 13, **caractérisé en ce que** le système (24) de traitement de l'information affiche les résultats de mesure sous forme d'un pourcentage d'usure ou sous forme graphique, le taux mesuré d'usure étant représenté par des échelons ou des pavés.

15. Dispositif selon l'une des revendications 9 à 14, **caractérisé en ce que**, en cas de détection d'une anomalie dans la mesure, le système (24) de traitement de l'information affiche l'anomalie détectée et éventuellement le diagnostic de panne ou de défaillance correspondant à cette anomalie.

## Claims

1. Device for diagnosis of the wear of the friction linings of a motor vehicle clutch, comprising means (10) for measurement of the force exerted on the clutch pedal of the vehicle for release of the clutch, and **characterised in that** it comprises means (14) for securing of the measurement means (10) onto the clutch pedal (12).

2. Device according to claim 1, **characterised in that** the measurement means (10) comprise an assembly in a single piece.

3. Device according to claim 1 or 2, **characterised in that** the measurement means (10) comprise a sensor (16) for force or pressure.

4. Device according to one of the preceding claims, **characterised in that** the measurement means (10) comprise a sensor (22) for displacement or position, for measurement of the variation of the clutch release force according to the position of the pedal (12).

5. Device according to claim 4, **characterised in that** the sensor (22) for displacement or position comprises means for connection to a fixed point, such as, for example, the steering wheel of the vehicle.

6. Device according to one of the preceding claims, **characterised in that** the measurement means (10) comprise a telemeter, for example of the laser or ultrasound type.

7. Device according to one of the preceding claims, **characterised in that** the measurement means (10) comprise a clock for measurement of the variation of the clutch release force on a time basis.

8. Device according to one of the preceding claims, **characterised in that** the measurement means (10) comprise means (16) for recording variations of the force which is exerted on them.

9. Device according to one of the preceding claims, **characterised in that** the measurement means (10) comprise means (26) for connection to a data processing system (24).

10. Device according to claim 9, **characterised in that** that the data processing system (24) is remote, and the measurement means are connected to it after disassembly of the pedal (12).

11. Device according to claim 9 or 10, **characterised in that** the data processing system (24) comprises means for displaying measurements and curves of variation of the measurements according to the displacements or time.

12. Device according to one of claims 9 to 11, **characterised in that** the data processing system comprises means for displaying a predetermined number of measurement points.

13. Device according to one of claims 9 to 12, **characterised in that** the data processing system (24) is designed to determine means of measurements carried out during a plurality of actuations of the pedal, and to estimate the wear of the linings on the basis of the measurements of the maximum force on the pedal, the displacement from the maximum force point with wear, the force on the pedal at the point of complete release of the clutch, and/or the gradient of the curve of the force on the pedal after the maximum force point.

14. Device according to one of claims 9 to 13, **characterised in that** the data processing system (24) displays the measurement results in the form of a percentage of wear or in graph form, the level of wear measured being represented by steps or blocks.

15. Device according to one of claims 9 to 14, **characterised in that**, in the event of detection of an abnormality in the measurement, the data processing system (24) displays the abnormality detected, and optionally the diagnosis of breakdown or failure corresponding to this abnormality.

## Patentansprüche

1. Vorrichtung zur Diagnose von Verschleiß der Reibbeläge einer Kraftfahrzeugskupplung, umfassend Mittel (10) zum Messen der auf das Kupplungspedal des Fahrzeugs zum Auskuppeln ausgeübten Kraft, **dadurch gekennzeichnet, dass** sie Mittel (14) zur Befestigung der Messmittel (10) am Kupplungspedal (12) umfasst.

2. Vorrichtung nach Anspruch 1, **dadurch gekennzeichnet, dass** die Messmittel (10) eine Monoblock-Gruppe bilden.

3. Vorrichtung nach Anspruch 1 oder 2, **dadurch gekennzeichnet, dass** die Messmittel (10) einen Kraft- oder Druckssensor (16) umfassen.

4. Vorrichtung nach einem der vorangehenden Ansprüche, **dadurch gekennzeichnet, dass** die Messmittel (10) einen Verlagerungs- oder Positionssensor (22) zur Erfassung der Veränderung der Auskuppelkraft in Abhängigkeit von der Position des Pedals (12) umfassen.

5. Vorrichtung nach Anspruch 4, **dadurch gekennzeichnet, dass** der Verlagerungs- oder Positionssensor (22) Mittel zur Verbindung mit einem festen Punkt wie beispielsweise dem Lenkrad des Fahrzeugs umfassen.

6. Vorrichtung nach einem der vorangehenden Ansprüche, **dadurch gekennzeichnet, dass** die Messmittel (10) einen Entfernungsmesser, beispielsweise vom Typ Laser oder Ultraschall, umfassen.

7. Vorrichtung nach einem der vorangehenden Ansprüche, **dadurch gekennzeichnet, dass** die Messmittel (10) eine Uhr zur Erfassung der Veränderung der Auskuppelkraft in Abhängigkeit von der Zeit umfassen.

8. Vorrichtung nach einem der vorangehenden Ansprüche, **dadurch gekennzeichnet, dass** die Messmittel (10) Mittel (16) zur Erfassung von Veränderungen der auf sie ausgeübten Kraft umfassen.

9. Vorrichtung nach einem der vorangehenden Ansprüche, **dadurch gekennzeichnet, dass** die Messmittel (10) Mittel (26) zum Anschluss an ein System (24) zur Informationsverarbeitung umfassen.

10. Vorrichtung nach Anspruch 9, **dadurch gekennzeichnet, dass** das System (24) zur Informationsverarbeitung entfernt ist und die Messmittel nach der Demontage vom Pedal (12) daran angeschlossen werden.

11. Vorrichtung nach Anspruch 9 oder 10, **dadurch gekennzeichnet, dass** das System (24) zur Informationsverarbeitung Mittel zum Anzeigen der Messungen und der Kurven der Veränderung der Messungen in Abhängigkeit von der Verlagerung oder der Zeit aufweist.

12. Vorrichtung nach einem der Ansprüche 9 bis 11, **dadurch gekennzeichnet, dass** das System (24) zur Informationsverarbeitung Mittel zum Anzeigen einer bestimmten Anzahl von Messpunkten umfasst.

13. Vorrichtung nach einem der Ansprüche 9 bis 12, **dadurch gekennzeichnet, dass** das System (24) zur Informationsverarbeitung konzipiert ist, um Mittelwerte der im Verlauf von mehreren Betätigungen des Pedals festgestellten Messungen zu bilden und um den Verschleiß der Beläge abzuschätzen ausgehend von Messungen der Maximalkraft am Pedal, von der Verlagerung des Punktes der Maximalkraft mit dem Verschleiß, von der Pedalkraft am Punkt des vollständigen Auskuppelns und/oder von der Steigung der Kurve der Pedalkraft nach dem Punkt der Maximalkraft.

14. Vorrichtung nach einem der Ansprüche 9 bis 13, **dadurch gekennzeichnet, dass** das System (24) zur Informationsverarbeitung die Ergebnisse der Messung anzeigt in der Form eines prozentualen Verschleißes oder in graphischer Form, wobei der gemessene Prozentsatz des Verschleißes durch Stufen oder Wellen dargestellt wird.

15. Vorrichtung nach einem der Ansprüche 9 bis 14, **dadurch gekennzeichnet, dass** im Fall der Entdeckung einer Anomalie in der Messung das System (24) zur Informationsverarbeitung die entdeckte Anomalie und eventuell die dieser Anomalie entsprechende Diagnose einer Störung oder eines Ausfalls anzeigt.
